# EUROPÄISCHE PATENTSCHRIFT

(11) **EP 0 827 089 B1**
(45) Veröffentlichungstag und Bekanntmachung des Hinweises auf die Patenterteilung: **29.10.2003**
(21) Anmeldenummer: 97113590.0
(22) Anmeldetag: 06.08.1997
(51) Int. Cl.: G06F 17/30

(54) **Verfahren zur Speicherung und Verknüpfung von grossen Mengen in elektronischen Datenverarbeitungsanlagen**
Method for storing and associating large data sets in electronic data processing systems
Méthode de stockage et d'association de grandes quantités de données dans un système électronique de traitement de données

(30) Priorität: 19.08.1996 DE 19633364
(43) Veröffentlichungstag der Anmeldung: 04.03.1998
(73) Patentinhaber: Fujitsu Siemens Computers GmbH, 81739 München (DE)
(72) Erfinder: Hill, Gerhard, 68789 St. Leon (DE); Hänel, Erwin, 81739 München (DE)
(74) Vertreter: Hermann, Uwe, Dipl.-Ing.

(56) Entgegenhaltungen:
- WO-A-92/06440
- INSELBERG A D ET AL: "Access method with good random and sequential capabilities" IBM TECHNICAL DISCLOSURE BULLETIN, NOV. 1973, USA, Bd. 16, Nr. 6, Seiten 1826-1828, XP002139207 ISSN: 0018-8689
- DATE, C.J.: "Introduction to data base systems, Vol. 1, 5th ed." 1990 , ADDISON-WESLEY PUBLISHING COMPANY, INC. XP002139208 Seite 77 - Seite 80 * Seite 79, Absatz 4 *

## Beschreibung

### Technisches Gebiet

Es handelt sich um ein Verfahren zur Speicherung und Verknüpfung von großen Mengen in Rechenanlagen, wie sie insbesondere bei Datenbankabfragen zur Erzeugung und Verknüpfung von temporäreren Ergebnistabellen entstehen.

### Stand der Technik

Bei der Abfrage von Ergebnismengen in Datenbanken, insbesondere bei der Abfrage von relationalen Datenbanken mit der Abfragesprache SQL, sind Auswahlbedingungen möglich, die mehrere Kriterien logisch verknüpfen, beispielsweise durch UND oder ODER Bedingungen. Um diese und andere Bedingungen von einer Abfragesprache aus auswerten zu können, ist ein allgemeines Verfahren notwendig, mit dem aus den Ursprungstabellen Ergebnistabellen gewonnen werden. Dies wird dadurch erreicht, daß aus jeder Elementarabfrage eine Zwischenergebnistabelle erstellt und die Zwischenergebnistabellen entsprechend den Operatoren der Abfragesprache verknüpft werden. Dabei werdem in Zwischenergebnistabellen zweckmäßigerweise nur die Satznummern (Systemschlüssel) für die Zeilen und nicht die gesamte Zeile gespeichert. Die Satznummer kann meist in einem Vollwort der Rechenanlagen gespeichert und daher äußerst effizient bearbeitet werden.

Ein Verfahren zum Zugriff auf Bereiche eines Speichermediums über einen Systemschlüssel ist in der Veröffentlichung von INSELBERG A D ET AL: 'Access method with good random and sequential capabilities' IBM TECHNICAL DISCLOSURE BULLETIN, NOC. 1973, USA, Bd. 16, Nr. 6, Seiten 1826 - 1828, XP002139207 ISSN: 0018-8689 beschrieben.

Für die Darstellung der temporären, die Satznummern enthaltenden Tabellen sind im wesentlichen zwei unterschiedliche Realisierungsarten bekannt, nach denen der Speicher der Rechenanlagen organisiert und die Mittel zu Zugriff und zur Verknüpfung gestaltet sind. Hierbei ist zu berücksichtigen, daß die Verknüpfung zweier temporärer Tabellen wieder als temporäre Tabelle verwendbar sein soll.

Bei einer ersten Art werden die Ordnungsnummern als Listen behandelt, welche in bekannter Art als Bäume in sortierter Form erstellt werden oder unsortiert erstellt und danach sortiert werden. Auf die sortierten Listen lassen sich dann die gewünschten Operationen, z.B. die Mengenoperationen Vereinigung und Durchschnitt für die logischen Verknüfpungen ODER bzw. UND anwenden und ergeben wieder eine sortierte Ergebnisliste. Nachteilig ist der hohe Aufwand entweder bei Erstellen bei binären Bäumen oder für das Sortieren der Listen, da die Daten für die Tabellen häufig in unsortierter Form anfallen. Dies ist beispielsweise der Fall, wenn eine Auswahlbedingung sich auf eine mit einen Sekundärindex versehene Spalte bezieht, die als nach dem Sekundärindex sortierte Tabelle gespeichert ist, welche als Daten die Satznummern der betreffenden Sätze hat. Abfragen nach Wertebereichen erzeugen dann schnell eine temporäre Ergebnismenge, welche jedoch nicht nach Satznummer sortiert ist.

Bei einer zweiten Art werden die Tabellen als Bitketten dargestellt, bei dem jeder Zeile bzw. Ordnungsnummer der Ursprungstabelle ein Bit zugeordnet ist. Die notwendigen Mengenopratione wie Vereinigung oder Durchschnitt können sehr schnell und effizient durchgeführt werden, und die Bitketten sind nach Konstruktion immer sortiert, da die Satznummer direkt in eine Byte- oder Wortadresse und Bitnummer im Wort zerfällt. Nachteilig ist jedoch, daß immer Speicherplatz im Arbeitsspeicher benötigt wird, der linear mit der Größe der Ursprungstabelle wächst. Für sehr große, beispielsweise verteilt gespeicherte, Datenbanken können die Bitketten nicht mehr im Arbeitsspeicher untergebracht werden und verlieren damit ihre leichte Benutzbarkeit. Zwar sind auch hierfür Verfahren vorgeschlagen worden, die trotz großer Basismengen eine Darstellung im Speicher erlauben, so z.B. in der Veröffentlichung von Theo Härder, Implementierung von Zugriffspfaden durch Bitlisten, Lecture Notes in Computer Science, Vol. 34, 1975, p. 379-393, Springer Verlag. Jedoch ist dieses Verfahren bei schütteren (engl. "sparse") Bitlisten, die also nur wenige weit verteilte Elemente umfassen, bei geringer Ebenentiefe mit hohen Speicherbedarf und bei großer Ebenentiefe mit entsprechend erhöhtem Verarbeitungsaufwand verbunden.

Aufgabe der Erfindung ist es daher, ein Verfahren zur Speicherung und Verknüpfung von Mengen anzugeben, welches wenig Aufwand bei der Erstellung benötigt, auch wenn die Daten unsortiert erscheinen, und dennoch schnelle Verknüpfungen zuläßt.

### Darstellung der Erfindung

Die Erfindung unterteilt die Satznummmer, welche die Elemente einer Menge darstellen, in einen höherwertigen und eine niederwertigen Teil. Der höherwertige Teil adressiert einen Eintrag in einer Assoziativtabelle, welche auf eine Untertabelle verweist, in welcher die niedrigwertigen Teile gespeichert sind. Die Untertabellen werden in zwei möglichen Formaten gehalten, nämlich entweder als unsortierte Sequenzen der niedrigwertigen Teile, oder als Bitketten.

### Kurzbeschreibung der Figuren

- Fig. 1: zeigt eine Beispielsmenge A,
- Fig. 2: zeigt eine Beispielsmenge B,
- Fig. 3: zeigt die Vereinigung von A und B,
- Fig. 4: zeigt den Schnitt von A und B.

### Beschreibung der Erfindung

Das Verfahren betrifft Mengen, deren Elemente durch eine Ganzzahl repräsentiert werden. Dies ist beispielsweise der Fall bei komplexen Datenbankabfragen, wie sie insbesondere mit der Abfragesprache SQL (Structured Query Language) bei relationalen Datenbanken getätigt werden können. Eine relationale Datenbank kann als eine Sammlung von Tabellen betrachet weden. Eine Abfrage mit SQL erlaubt es, für verschiedene Spalten einer Tabelle Auswahlbedingungen anzugeben und diese durch Bool'sche Operatoren zu verknüpfen, wobei den Operatoren AND, OR, XOR und NOT die Mengenoperationen Schnitt, Vereinigung, Antivalenz und Komplement entsprechen.

Zur Durchführung einer derartigen Abfrage werden zunächst aus der bezogenen Tabelle diejenigen Zeilen der Tabelle ausgewählt, die der Auswahlbedingung entsprechen, also beispielsweise einen bestimmten Feldinhalt haben. Dadurch entsteht konzeptuell eine Anzahl von temporären Tabellen, die mit den bekannten logischen Verknüpfungen UND, ODER, NICHT usw. zu der Ergebnistabelle verknüpft werden.

Um diese Verknüpfung effizient abzuwickeln, werden die temporären Tabellen durch Mengen von Satznummern dargestellt. Diese Mengen von Satznummern entstehen häufig in nicht nach Satznummern sortierter Form. Dies ist beispielsweise der Fall, wenn ein Feldinhalt, der über einen Sekundärindex zugreifbar ist, innerhalb eines bestimmten Intervalls liegen soll. In diesem Fall ist es am besten, einfach lediglich den Sekundärindex zu bearbeiten, der ohnehin lediglich die Satznummern als Verweis enthält.

Gemäß der Erfindung wird nur eine Satz- oder Ordnungsnummer durch Division in eine Klasse und einen Rest zerlegt. Bevorzugt wird dabei ein Divisior, der eine Potenz von Zwei ist, verwendet, so daß die Ordnungsklasse durch die ersten und der Ordnungsrest durch die letzten Bits der binären Darstellung der Satznummer extrahiert wird.

Eine Menge wird nunmehr dargestellt durch einen "Baum" mit einer "Wurzel" und einer Reihe von "Blättern", die zu zwei unterschiedlichen Formen gehören, welche einfach ineinander überführt werden können. Die "Wurzel", im folgenden als Mengenkopf bezeichnet, ist eine Assoziativtabelle. Jede Zeile dieser Tabelle enthält als Suchbegriff eine Ordnungsklasse und als Inhalt einen Verweis auf die zu dieser Klasse gehörenden Teilmenge. Diese Teilmenge wird nun in zwei verschiedenen Formaten gespeichert, die beide jedoch nur Gebrauch von dem Ordnungrest machen. Eine übliche realistische Anwendung würde die Satznummer in einem 32-Bit-Wort speichern und die ersten 16 Bit als Ordnungsklasse und die letzten 16 Bit als Ordnungrest nehmen. Um die Beispiele in den Figuren übersichtlicher zu gestalten, wird dort eine Darstellung mit zwei Dezimalziffern ausgegangen. In diesem Fall besteht der Mengenkopf aus Zeilen, die in der ersten Ziffer die Ordnungsklasse abspeichern und in der folgenden Ziffer die "Adresse" der Restmenge. Das Format der Restmenge ist in den Figuren einfach zu der Darstellung hinzugefügt; in realistischen Anwendungen würde es bevorzugt in den Mengenköpfen vermerkt; möglich ist auch eine Speicherung in in weiteren Tabellen oder in den Restmengen selbst.

Die erste Darstellung einer Restmenge ist eine Bitkette. Da laut unserer Annahme der Ordnungsrest 16 Bit breit ist, sind 65536 Bits zu speichern, wofür 8192 Bytes oder 2048 Wörter ä 32 Bit notwendig sind. Eine UND-, ODER-, XOR- oder NOT-Verknüpfung zweier als Bitkette dargestellter Restmengen ist einfach möglich, indem die 2048 Wörter beider Restmengen parallel durchlaufen und jeweils durch den entsprechenden Maschinenbefehl verknüpft werden. Dabei ist es unerheblich, nach welcher Vorschrift ein Ordnungrest einem Bit zugeordnet ist, solange dieselbe Vorschrift für beide zu verknüpfende Restmengen verwendet wird. In der kanonischen Darstellung sind die höchstwertigen elf Bits des Ordnungsrests die Relativadresse des Wortes, in dem der Ordnungsrest gespeichert ist, und die letzten fünf Bits stellen die Bitnummer in dem so adressierten Wort dar. Es ist aber auch ohne weiteres möglich, die niedrigstwertigen elf Bits als Wortadresse und die höchstwertigen fünf als Bitadresse zu verwenden. Auch ist es möglich, die ersten beiden und letzten drei Bits für die Bitnummer und die mittleren für die Wortnummer zu verwenden, da viele gebräuchliche Machinenarchitekturen die Wörter mit einer Byteadresse adressieren, so daß ein UND-Befehl die Wortadresse bestimmt. Die Auswahl richtet sich danach, welche Version auf der zu verwendenden Maschinenarchitektur einen schnellen Zugriff auf ein Bit erlaubt. In der kanonischen Darstellung kann die Adresse des Wortes durch Maskierung und Rechtsverschieben um zwei Stellen bestimmt werden. Das adressierte Bit wird durch Maskierung der letzten fünf Bits und Verwendung als Index in eine Tabelle mit 32 Wörtern verwendet, bei denen jeweils nur das dem Index zugeordnet Bit gesetzt ist, als Maske geladen und über einen der genannten Maschinenbefehle für logische Operationen verknüpft.

Es ist offensichtlich, daß bei der Darstellung als Bitkette zwar 8kByte pro vertretener Ordnungsklasse benötigt werden, aber dafür die Mengenoperationen unabhändig von der Belegung der Restmengen schnell sind und auch das Löschen oder Hinzufügen eines Elements recht effizient möglich ist. Besonders problematisch ist jedoch dieses Format, wenn in jeder Ordnungsklasse nur einige wenige Elemente vertreten sind, obwohl Platz für 65536 Elemente freigehalten werden muß.

Die zweite Darstellung verwendet einfach eine Sequenz oder Liste der Ordnungsreste, in der die Ordnungreset einfach hintereinander in Speicherwörter eingetragen sind, ohne daß diese sortiert sein müssen oder Vorkehrungen getroffen werden, daß ein Ordnungsrest nur einmal in einer Liste auftritt. Zweckmäßig wird am Anfang der Liste ein Zähler mitgeführt, der die Länge, d.h. die Anzahl der eingetragenen Ordnungsreste, darstellt. Dieser kann jedoch auch in dem Mengenkopf abgespeichert werden. Läßt die Maschinensprache eine Abspeicherung von Halbwörtern gepackt zu, so wird auch nur der Ordnungsrest abgespeichert. Andernfalls ist zu ermitteln, ob ein Packen in Wörter oder ein ungepacktes Abspeichern zweckmäßiger ist, wobei im letzteren Fall die gesamte ursprüngliche Satznummer, d.h. einschließlich Ordnungsklasse, gespeichert, aber nur der Ordnungsrest ausgewertet wird.

Diese Darstellung als Sequenz ist sicherlich bei schütteren Mengen, bei denen pro Ordnungsklasse nur wenige Elemente vertreten sind, sehr speichersparend. Bei fast voll besetzten Ordnungsklassen jedoch wird wesentlich mehr Speicher als für eine Bitkette benötigt; ungepackt würde dies 4*64kBytes = 256 Kbytes gegenüber 8kBytes, logischerweise das 32fache, bedeuten. Außerdem erscheinen die Mengenoperationen als langwierig, weil zunächst die Sequenzen sortiert werden müßten.

Es ist zunächst noch festzuhalten, daß beide Mengen problemlos in die jeweils andere Form überführt werden können, wobei die Umwandlung einer Sequenz in eine Bitkette besonders einfach ist, indem eine leere Teilmenge, bevorzugt durch Kopieren einer für diesen Zweck bereitgestellten leeren Bitkette, erstellt wird und sodann aus den in der Sequenz enthaltenen Ordnungsresten in der abgelegten Reihenfolge Wortadresse und Maske bestimmt werden und die Maske durch eine ODER-Operation das entsprechende Bit setzt. Die inverse Operation lädt jedes Wort der Bitkette. Ist es Null, kann gleich zum nächsten weitergeschritten werden; ist es nicht Null, müssen, vorzugsweise durch Schiebeoperationen, die Bits bestimmt und der entsprechende Ordnungsrest an die anfänglich leere Sequenz des Ergebnisses angehängt werden.

Für eine Vereinigung zweier als Sequenzen vorliegender Mengen ist eine schnelle Bearbeitung möglich. Hierzu sind einfach die Ordnungsreste der zweiten Menge an die der ersten Menge anzuhängen, was mit Hilfe eines Speichertransports sehr schnell und effizient erreicht wird. Selbstverständlich muß die Anzahl der gespeicherten Ordnungsreste entsprechend durch Addition erhöht werden, die damit immer größer oder gleich der Anzahl der tatsächlich vorhandenen Elemente ist, da Duplikate vorkommen können. Da die Menge weder sortiert noch duplikatfrei dargestellt ist, ist das Ergebnis weiterhin eine zulässige Darstellung einer Restmenge als Sequenz.

Auch die Vereinigung einer Menge im Format einer Bitkette mit einer Menge im Format einer Sequenz ist einfach und effizient durchführbar. Hierzu werden die Ordnungsnummern der Sequenz in der gespeicherten Reihenfolge genommen, wie oben dargestellt in eine Maske und ein Adresse des Wortes in der Bitketten-Darstellung umgerechnet und die Maske mit einer ODER-Operation dazu benutzt, das Element der jeweiligen Ordnungsnummer in der Bitketten-Darstellung hinzuzufügen. Sollte es bereits vorhanden sein, so ist die ODER-Operation zwar überflüssig, aber schneller als eine Abfrage und Verzweigung, welche letzere gerade bei modernen Pipeline-Architekturen möglichst zu vermeiden ist.

Hier und im folgenden wird nicht unterschieden, ob die Mengenoperation einen der beiden Operanden überschreiben darf, wie es soeben der Fall war. Gegebenenfalls ist eine Kopie des Operanden anzulegen, ohne daß dieses im weiteren besonders erwähnt wird.

Die Schnittmenge einer als Bitkette dargestellten und einer als Sequenz dargestellten Restmenge ist ähnlich der Vereinigung, nur daß als Resultat keine Bitkette, sondern eine Sequenz entsteht. Hierzu werden die Ordnungsnummern der Sequenz des einen Operanden in der abgelegten Reihenfolge benutzt, um in beschriebener Art das entsprechende Bit in der Bitkette des anderen Operanden zu adressieren. In bekannter Art wird bestimmt, ob das Bit in der Bitkette gesetzt ist und, sofern dies zutrifft, der Ordnungsrest an die Sequenz, in der das Ergebnis gespeichert ist, angefügt. Dabei ist es ersichtlich weder notwendig, daß der als Sequenz vorliegende Operand sortiert noch duplikatfrei ist; der Effizienzverlust bei unsortierer oder duplikathaltiger Darstellung ist geringer als der Effizienzgewinn durch eine kurze, wenig verzweigte Programmschleife, welche wesentlich weniger Zeit benötigt als eine Sortierung der Sequenz.

Sollten beide Mengen als Sequenzen vorliegen, so wird eine der beiden zunächst in eine Bitkette gewandelt und dann das beschriebene Vorgehen bei gemischter Operation verwendet.

Da die Anzahl der Elemente bei einer Schnittbildung immer kleiner oder gleich der Anzahl der Elemente der Ausgangsmengen ist, kann der Speicherbedarf immer vorab geschätzt werden, weil der nicht größer ist als die Anzahl der Elemente der kürzesten Sequenz. Damit ist sichergestellt, daß die Schnittbildung, die ja eine Sequenz erzeugt, nicht wesentlich mehr Platz benötigt als eine Bitkette.

Hierbei unterstützt eine Fortbildung der Erfindung. Bei der Erstellung einer Sequenz kann es möglich sein, daß der Speicherbedarf sich dem einer Bitkette nähert oder diesen sogar übersteigt. Daher wird eine Schranke von z.B. 4kBytes festgelegt, oberhalb derer eine soeben erzeugte Sequenz vor einer weiteren Verarbeitung in eine Bitkette umgewandelt wird. Im Fall einer Schnittbildung tritt der Fall nicht ein, da ja die Zielsequenz nicht größer als die kleinste Quellsequenz sein kann. Im Fall einer Vereinigung ist dies möglich, wenn beide Quellsequenzen bereits nahe an der Schranke sind. Da die Schranke im Beispiel bei der Hälfte des Platzbedarfs einer Bitkette liegt, benötigt die Vereinigung zweier Sequenzen nicht mehr Platz als eine Bitkette und wird nach der Vereinigung in eine solche gewandelt.

Ensprechend kann eine schüttere Bitkette in eine Sequenz gewandelt werden, wenn die Anzahl der Elemente eine weitere Schranke, z.B. 256, unterschreitet. Hierzu ist es zweckmäßig, auch für Bitketten, wie bereits ausgeführt, einen Zähler über die Anzahl der Elemente, vorzugsweise im Mengenkopf, mitzuführen. Zu berücksichtigen ist auch der Aufwand zur Pflege des Zählers, der in einer Bitkette erheblich zu Buche schlägt.

Auch die Bildung der mengenmäßigen Antivalenz ist bei dem erfindungsgemäßen Verfahren der Speicherung von Mengen schnell und effizient möglich. Liegen beide Mengen als Bitketten vor, wird wie üblich wortweise verknüpft. Liegen beide Quelltabellen als Sequenzen vor, so wird die längere in eine Bitkette umgewandelt. Fernerhin wird eine Kopie der als Bitkette vorliegenen einen Quelltabelle angelegt. Danach wird die als Sequenz vorliegende Quelltabelle ähnlich wie bei der Schnittbildung sequentiell abgearbeitet, das adressierte Bit in der Quell-Bitkette aufgesucht, invertiert und in die Ziel-Bitkette übertragen. Diese Operation ist nur geringfügig aufwendiger als die Schnittbildung, weil bei letzterer die mehrfache Anwendung des Bitlöschens durch eine duplikathaltige Sequenz möglich ist, jedoch nicht bei der Invertierung, für die jedesmal die unveränderte Quellmenge heranzuziehen ist. Ist die entstehende Bitkette schütter, wird sie in eine Sequenz gewandelt.

Die Bildung eines mengenmäßigen Komplements ist bekanntermaßen insofern problematisch, als die Gesamtmenge gegeben sein muß. Ist diese aus der Datenbank bestimmbar, dann wird das Komplement zweckmäßig nach den mengentheoretischen Regeln durch Antivalenz der Quellmenge mit der Gesamtmenge bestimmt. Es ist aber auch möglich, ein Komplement bezogen auf den gesamten möglichen Mengenbereich zu bilden, wie weiter unten noch genauer ausgeführt wird. Die Komplementbildung einer als Bitkette gespeicherten Teilmenge wird durch wortweise Invertierung erreicht. Liegt die Quellmenge als Sequenz vor, also als schüttere Menge, dann wird die Zielmenge viele Elemente umfassen und ohnehin als Bitkette zu speichern sein. Es wird also eine Bitkette mit allen möglichen Elementen gebildet und durch Iteration über die Ordnungsreste der Quellmenge werden die adressierten Bit der Zielmenge gelöscht. Eine Invertierung ist nicht zulässig, da die Ordnungsreste in der Quellmenge mehrfach auftreten können. Es ist allerdings zu beachten, daß, entsprechend der bekannten theoretischen Problematik von Negation bzw. Komplement, die Zielmenge Elemente enthalten kann, die nicht in der Gesamtmenge, sprich der Tabelle der Datenbank, enthalten sind. Dies kann jedoch in den weiteren Schritten einfach berücksichtigt werden, so daß hier ein Schnitt mit der Gesamtmenge zwar mögich, aber nicht notwendig ist.

Bislang wurde nur die mengenmäßige Verknüpfung der Teilmengen betrachtet, welche bezüglich der Effizienz der Verknüpfung auch primär bedeutend ist. Jedoch ist auch die Verknüpfung in Bezug auf die Mengenköpfe einfach und effizient.

Bei dem mengenmäßigen Schnitt brauchen nur solche Zeilen berücksichtigt werden, deren Ordnungsklassen in beiden Quellmengen vertreten sind. Zweckmäßig werden daher die Zeilen der Mengenköpfe nach den Ordnungsklassen als Schlüssel aufsteigend sortiert gehalten. Die Schnittbildung besteht dann in bekannter Art darin, nur die Zeilen mit gemeinsamen Schlüsseln in den Mengenkopf der Zielmenge zu übernehmen und die zugehörige Teilmenge wie oben beschrieben aus den Teilmengen der Quellmengen zu bestimmen. Alle Zeilen, die keine Entsprechung in der jeweils anderen Menge haben, fallen vollständig fort. Dies führt zu einer hohen Effizienz, da diese Teilmengen gar nicht bearbeitet werden müssen. Hierbei ist zu beachten, daß Datenbankdesigner häufig entgegen den theoretischen Regeln mehrere ähnliche Tabellen in einer gemeinsamen Tabelle darstellen und die Unterscheidung durch einen Indikator in einer oder mehreren Spalten zu erreichen, auf denen dann auch meist ein Sekundärindex liegt. Damit wird die Anzahl der Tabellen übersichtlich gehalten. Dies führt jedoch dazu, daß viel Abfragen immer eine Konjuktion der Art "AND Typ='X'" enthalten, welche zu einem mengenmäßigen Schnitt führt, bei dem zwar beide Quellmengen einen großen Teil der Datenbank-Tabelle umfassen, aber bei der Schnittbildung eine recht geringe Schnittmenge entsteht. Dies sind häufig die genannten Fälle, in denen einer Zeile im Mengenkopf der einen Quelltabelle keine entsprechende Zeile im Mengenkopf der anderen Quelltabelle entspricht und die Schnittbildung damit sehr effizient erfolgt.

Auch bei der Vereinigung und Antivalenz von Mengen müssen nur diejenigen Teilmengen verknüpft werden, die zu gleichen Ordnungklassen gehören. Die andern Zeilen können un verändert in die Zielmenge übernommen werden; die Teilmengen, gleich welchen Formats, werden nicht bearbeitet.

Lediglich die Komplementbildung erzeugt die üblichen Probleme des Bezugs auf eine Gesamtmenge. Eine einfache Lösung besteht darin, eine vollständig besetzte Bitkette anzulegen und für alle in der Quellmenge nicht vorhandenen Ordnungsklassen Zeilen in der Zielmenge anzulegen, welche auf die vollständig besetzte Bitkette zeigen.

Eine Verbesserung kann einmal dadurch erreicht werden, daß in einer Zeile des Mengenkopfes ein Indikator ALL gesetzt wird, der angibt, daß die Ordnungklasse vollständig besetzt ist, anstatt einen Verweis auf eine vollständig besetzte Bitkette zu verwenden. Bei der Schnittbildung kann damit die korrespondierende Teilmenge der anderen Quellmenge ohne Bearbeitung übernommen werden; bei der der Vereinigung der Indikator ALL. Bei der Komplementbildung kann die Zeile gestrichen werden. Bei der Antivalenz ist eine Komplementbildung der Teilmenge durchzuführen. Analog kann eine Verbesserung erreicht werden, indem ein weiterer Indikator NUL für eine leere Teilmenge verwendet wird, welche dann entsprechend handzuhaben ist. Dies vermeidet es, Zeilen aus dem Mengenkopf zu streichen.

Um im Falle der Komplementbildung eine Expansion des Mengenkopfes auf die Maximalzahl der Zeilen zu vermeiden, kann für den gesamten Mengenkopf ein Indikator vorgesehen werden, daß nicht vorhandene Zeilen wie mit dem Indikator ALL versehen (anstelle von NUL) zu behandeln sind.

Anstelle einer bevorzugten einen Darstellung der Teilmengen als Bitkette sind andere Formate möglich, die über eine sortierte und duplikatfreie Speicherung einen direkten Zugriff auf die Elemente der Menge zulassen und daher auch als Zugriffsformat der Speicherung bezeichnet werden. Diese anderen Formate können beispielsweise bereits bekannte Formate wie Bäume oder hierarchische Bitlisten sein. Da an das zweite Speicherformat, als Ablageformat bezeichent, keine besonderen Anforderungen gestellt werden, sind hierzu alle Formate, die insbesondere eine platzsparende Speicherung zulassen, möglich. Auch sind als Ablageformate solche möglich, die eine Datenkompression wie beispielsweise Run-Length-Codes, Lev-Zimpel-Walch o.ä. umfassen.

Bei der Anwendung in Datenbanken-Abfragesprachen kann im Rahmen der Syntaxanalyse ermittelt werden, ob das Ergebnis einer Verknüpfung nicht weiter verknüpft wird, sondern vielmehr dazu verwendet wird, die Sätze der Tabelle anhand der Satznummern zu extrahieren. In diesem Fall ist es sinnvoll, sofern eine Teilmenge als Sequenz gebildet wird, in dieser nicht nur die Ordnungsreste, sondern die gesamten Satznummern abzuspeichern.

Für die Speicherung der Sequenzen werden sinnvollerweise bekannte Verfahren zur Vermeidung von Fragmentierung angewendet, indem beispielsweise für die Speicherung von Sequenzen die benötigten Speicherblöcke auf Größen aufgerundet werden, deren Quotient mit der Größe der für die Bitketten benötigten Blöcke eine Zweierpotenz ergibt und die verfügbare Größe in einem Blockkopf vermerkt wird, so daß ein Auffüllen möglich ist. Andere Varianten, die mit Speicherblöcken verschiedener fester Längen arbeiten, welche in Listen- oder Tabellenform strukturiert verwaltet werden, sind ebenfalls möglich.

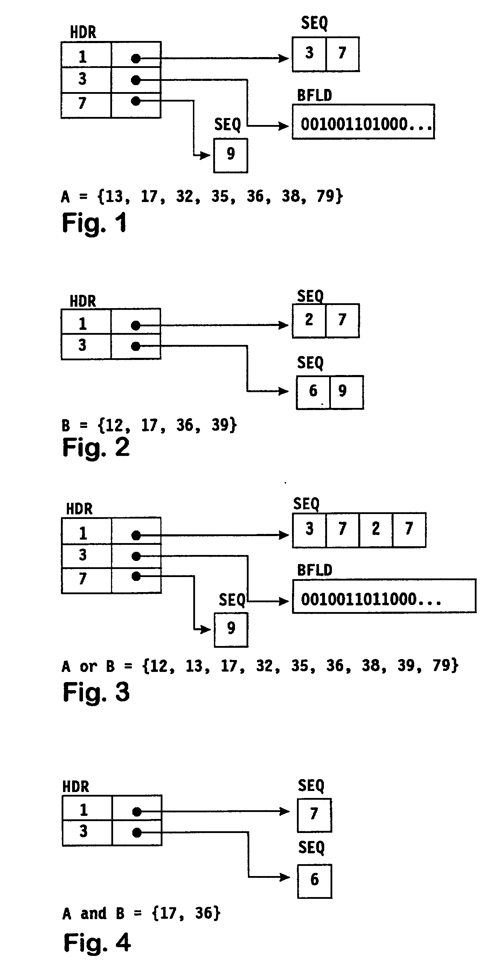

Die Figuren 1 bis 4 zeigen ein zwecks Übersichtlichkeit besonders einfaches Beispiel, in dem die beiden Mengen A={13,17,32,35,36,38,79} und B={12,17,36,39} beispielhaft sowohl per Vereinigung als auch Schnitt verküpft werden.

Dabei wird als Modul die Zahl 10 verwendet, so daß die erste Ziffer der Dezimaldarstellung die Ordnungsklasse und die zweite Ziffer den Ordnungsrest angibt. Der Mengenkopf ist mit "HDR" markiert, eine Sequenz mit "SEQ" und eine Bitkette, auch Bitfeld genannt, mit "BFLD". In einer Bitkette stellt das erste Bit links das Element 0, das nächste das Element 1, und so weiter von links nach rechts mit aufsteigender Wertigekeit, dar. In Fig. 1 ist die erste Teilmenge eine Sequenz, die zweite ein Bitfeld und die dritte wieder eine Sequenz. In Fig. 2 liegen nur Sequenzen vor. Bei der in Fig. 3 dargestellten Vereinigung ist erkennbar, daß die Sequenz zur Ordnungsklasse "1" die "7" als redundantes Element enthält, weil die beiden Sequenzen aneinander gehängt wurden. Für die Ordnungsklasse "3" mußten lediglich das 7-te Bit "6" und das 10-te Bit "9" gesetzt werden, wobei das Bit "6" bereits in der Menge "A" gesetzt war. Bei dem in Fig. 4 dargestellten Schnitt war zunächst die Sequenz "3,7" der Ordnungsklasse "1" von "A" in ein Bitfeld {00010001000...} zu verwandeln, was nicht gezeigt ist, und sodann die Teilmenge zu bilden, indem von jedem Element der Sequenz "2,7" geprüft wird, ob sie in dem Bitfeld enthalten ist, so daß nur "7" in die Zielsequenz übernommen wurde.

Obwohl die Beschreibung in Bezug auf die Auswertung von Datenbankanwendungen, insbesondere für relationale Datenbanken mit SQL-Abfragen, erfolgte, ist die Erfindung ersichtlich auf jeden Fall, in dem große Mengen zu speichen und zu verknüpfen sind, anwendbar.

## Patentansprüche

1. Anordnung von Daten in einem Speicher einer Rechenanlage zur Speicherung einer Menge von Elementen, die zur Verknüpfung durch Verarbeitungsmittel der Rechenanlage bestimmt ist, wobei
- die Elemente der Menge durch eine, vozugsweise binär,codierte, als Ordnungsnummer bezeichnete Ganzzahl bestimmt sind;
- die Ordnungsnummer mittels Division durch einen für alle Elemente gleichen, vorbestimmten Modul in eine Ordnungsklasse, welche der Quotient ist, und einen Ordnungsrest, welcher der Rest ist, zerfällt;
- in einer ersten Anzahl aufeinanderfolgender erster Speicherzellen ein Mengenkopf als Tabelle von Zeilen gespeichert ist, in der jede Zeile gleichviel Speicherzellen umfaßt;
- in den Speicherzellen jeder Zeile erstens eine Ordnungsklasse und zweitens eine Verbindung zu einer Teilmenge durch Speicherung einer Adresse einer Anzahl zweiter Speicherzellen gespeichert ist, wobei die in den Zeilen gespeicherten Ordnungsklassen paarweise disjunkt sind,
**dadurch gekennzeichnet, daß**
die Speicherung der Teilmengen in aufeinanderfolgenden zweiten Speicherzellen in einem von mindestens zwei unterschiedlichen und ineinander überführbaren, lediglich den Ordnungsrest benutzenden Formaten erfolgt, wobei
* ein erstes Format ein Ablageformat ist, in dem die Ordnungsreste in einer zweiten Anzahl von Speicherzellen nicht notwendig sortiert oder duplikatfrei gespeichert sind,
* ein zweites Format ein Zugriffsformat ist, in dem die Ordnungsreste in einer dritten Anzahl von Speicherzellen sortiert und duplikatfrei gespeichert sind.

2. Anordnung nach Anspruch 2, wobei als Zugriffsformat eine Bitkette verwendet wird, in der die Ordnungsreste dadurch ablegbar sind, daß jedem möglichen Ordnungsrest ein Bit von im Speicher aufeinanderfolgenden Speicherzellen zugeordnet ist.

3. Anordnung nach Anspruch 2, wobei als ein Zugriffsformat eine hierarchische Bitliste verwendet wird.

4. Anordnung nach Anspruch 2, wobei als ein Zugriffsformat ein Baum verwendet wird.

5. Anordnung nach einem der Ansprüche 1 bis 4, wobei als Ablageformat eine Sequenz von Ordnungsresten verwendet wird, in dem die Ordnungsreste in jeweils einem oder mehreren im Speicher aufeinanderfolgenden Speicherzellen abgelegt ist.

6. Anordnung nach einem der Ansprüche 1 bis 4, wobei als Ablageformat eine sequentielle Speicherung unter Anwendung eines Datenkompressionsverfahrens verwendet wird.

7. Betriebsverfahren zur Speicherung von zur Verknüfung durch Verarbeitungsmittel in der Rechenanlage bestimmten Mengen in dem Speicher einer Rechenanlage, wobei
- die Elemente einer Menge durch eine Ganzzahl, die Ordnungsnummer, bestimmt sind;
- die Ordnungsnummer durch einen vorbestimmten Modul dividiert und so in eine Ordnungsklasse, welche der Quotient ist, und einen Ordnungsrest, welcher der Rest ist, zerlegt wird;
- für jede Menge ein Mengenkopf in eine Tabelle geschrieben ist, wobei der Mengenkopf mindestens soviele Zeilen umfaßt, wie die Menge Ordnungsklassen hat;
- in jeder Zeile eines Mengenkopfes die Ordnungsklasse als Schlüssel und eine Adresse einer Teilmenge gespeichert ist,
wobei in einer Teilmenge Elemente gleicher Ordnungsklasse eingetragen sind,
**dadurch gekennzeichnet, daß**
Teilmengen in einem von mindestens zwei unterschiedlichen und ineinander überführbaren, lediglich den Ordnungsrest benutzenden Formaten gespeichert sind, wobei
* ein erstes Format ein Ablageformat ist, in dem die Ordnungsreste nicht notwendig sortiert oder duplikatfrei gespeichert werden,
* ein zweites Format ein Zugriffsformat ist, in dem die Ordnungsreste sortiert und duplikatfrei gespeichert werden.

8. Verfahren nach Anspruch 7, wobei als ein Zugriffsformat eine Bitkette verwendet wird.

9. Verfahren nach Anspruch 7, wobei als ein Zugriffsformat eine hierarchische Bitliste verwendet wird.

10. Verfahren nach Anspruch 7, wobei als ein Zugriffsformat ein Baum verwendet wird.

11. Verfahren nach einem der Ansprüche 7 bis 10, wobei als ein Ablageformat eine Sequenz von Ordnungsresten verwendet wird.

12. Verfahren nach einem der Ansprüche 7 bis 10, wobei als Ablageformat eine sequentielle Speicherung unter Anwendung eines Datenkompressionsverfahrens verwendet wird.

13. Verfahren nach einem der Ansprüche 7 bis 12, wobei ein Binärrechner verwendet wird, der Wertebereich der Ordnungsnummer der Wortbreite des verwendeten Rechners oder einem Vielfachen davon entspricht und der Modul eine Potenz von Zwei ist.

14. Verfahren nach einem der Ansprüche 7 bis 13, wobei eine Teilmenge in einem Ablageformat dann in ein Zugriffsformat umgewandelt wird, wenn ihre Größe eine vorgegebene Schranke übersteigt.

15. Verfahren nach einem der Ansprüche 7 bis 13, wobei eine Teilmenge in einem Zugriffsformat dann in ein Ablageformat umgewandelt wird, wenn ihre Größe eine vorgegebene Schranke unterschreitet.

16. Betriebsverfahren für eine Rechenanlage zur Verknüpfung zweier nach einem der Ansprüche 1 bis 15 gespeicherten Quellmengen zur Erzeugung einer mengenmäßigen Vereinigung, ergebend eine Zielmenge, **gekennzeichnet durch** folgende Schritte:
- der Mengenkopf der Zielmenge wird **durch** Mischen der Mengenköpfe der Quellmengen hergestellt, indem Zeilen mit Ordnungklassen, die in nur einer der Quellmengen vorkommen, unverändert übernommen werden und eine Ziel-Teilmenge aus den Quell-Teilmengen von Zeilen gleicher Ordnungsklassen wie folgt erstellbar ist:
- sind beide Quell-Teilmengen in einem Zugriffsformat gespeichert, dann werden die Einträge in der gespeicherten Reihenfolge **durch** eine ODER-Operation zu einer Ziel-Teilmenge in einem Zugriffsformat verknüpft,
- sind beide Quell-Teilmengen in einem Ablageformat gespeichert, dann wird die Ziel-Teilmenge in einem Ablageformat **durch** unsortiertes Hinzufügen einer der beiden Quell-Teilmengen zu einer Kopie der anderen Quell-Teilmenge erzeugt,
- ansonsten wird die Ziel-Teilmenge als Kopie der im Zugriffsformat gespeicherten Quell-Teilmenge erstellt und anschließend die im Ablageformat gespeicherte Quell-Teilmenge in ihrer gespeicherten Reihenfolge bearbeitet und der jeweilige Ordnungsrest in die Ziel-Teilmenge eingetragen.

17. Betriebsverfahren für eine Rechenanlage zur Verknüpfung zweier nach einem der Ansprüche 1 bis 15 gespeicherten Quellmengen zur Bildung eines mengenmäßigen Schnitts, ergebend eine Zielmenge, **gekennzeichnet durch** folgende Schritte:
- der Mengenkopf der Zieltabelle wird **durch** Mischen der Mengenköpfe der Quelltabellen dergestalt hergestellt, daß nur bei Zeilen gleicher Ordnungsklassen in die Zielmenge übernommen werden und eine Ziel-Teilmenge aus den Quell-Teilmengen wie folgt erstellbar ist:
- sind beide Quell-Teilmengen in einem Zugriffsformat gespeichert, dann werden die Einträge in der gespeicherten Reihenfolge **durch** eine UND-Operation zu einer Ziel-Teilmenge in einem Zugriffsformat verknüpft,
- ansonsten wird die eine im Ablageformat gespeicherte Quell-Teilmenge in ihrer gespeicherten Reihenfolge bearbeitet, der jeweilige Ordnungsrest in der anderen im Zugriffsformat gespeicherten Quell-Teilmenge gesucht und, wenn er gefunden wurde, an eine anfänglich leere Ziel-Teilmenge im Ablageformat angefügt.

18. Betriebsverfahren für eine Rechenanlage zur Verknüpfung zweier nach einem der Ansprüche 1 bis 15 gespeicherten Quellmengen zur Bildung einer mengenmäßigen Antivalenz, ergebend eine Zielmenge, **gekennzeichnet durch** folgende Schritte:
- der Mengenkopf der Zielmenge wird **durch** Mischen der Mengenköpfe der Quellmengen hergestellt, indem Zeilen mit Ordnungklassen, die in nur einer der Quellmengen vorkommen, unverändert übernommen und eine Ziel-Teilmenge aus den Quell-Teilmengen von Zeilen gleicher Ordnungsklassen wie folgt erstellbar ist:
- sind beide Quell-Teilmengen in einem Zugriffsformat gespeichert, dann werden die Einträge in der gespeicherten Reihenfolge **durch** eine XOR-Operation zu einer Ziel-Teilmenge im Zugriffsformat verknüpft,
- sind beide Quell-Teilmengen in einem Sequenzformat gespeichert, dann wird eine, bevorzugt die längere, Teilmenge in ein Zugriffsformat gewandelt und der folgende Schritt ausgeführt,
- ansonsten wird die eine im Ablageformat gespeicherte Quell-Teilmenge in ihrer gespeicherten Reihenfolge bearbeitet und der jeweilige Ordnungsrest in der anderen, im Zugriffsformat gespeicherten Quell-Teilmenge aufgesucht, invertiert und in die Ziel-Teilmenge übertragen, wobei die Ziel-Teilmenge zuvor als Kopie der anderen Quell-Teilmenge im Zugriffsformat erstellt wird.

19. Betriebsverfahren für eine Rechenanlage zur Bildung eines mengenmäßigen Komplements einer nach einem der Ansprüche 1 bis 15 gespeicherten Quellmenge, ergebend eine Zielmenge, **gekennzeichnet durch** folgende Schritte:
- der Mengenkopf der Zielmenge wird aus dem Mengenkopf der Quellmenge hergestellt, indem für Ordnungsklassen, die nicht in der Quellmenge vorkommen, Zeilen mit einem Verweis auf eine vollständig besetzte Teilmenge erstellt werden und eine Ziel-Teilmenge aus den verbleibenden Quell-Teilmengen wie folgt erstellbar ist:
- ist die Quell-Teilmenge im Zugriffsformat gespeichert, so wird die Ziel-Teilmenge als Kopie der Quell-Teilmenge mit invertierten Einträgen erstellt,
- ansonsten wird die im Ablageformat vorliegende Quell-Teilmenge in ihrer gespeicherten Reihenfolge bearbeitet, indem die jeweiligen Ordnungsreste aus einer Ziel-Teilmenge gelöscht werden, welche als vollständig gefüllte Teilmenge im Zugriffsformat erstellt wurde.

20. Verfahren nach einem der Ansprüche 16 bis 19, wobei für eine leere Teilmenge der Verweis als NIL bzw. für eine vollständig gefüllte Teilmenge der Verweis als ALL markiert wird, ohne daß eine Teilmenge vorhanden ist.

21. Verfahren nach Anspruch 20, wobei ein Mengenkopf derart markierbar ist, daß alle nicht in dem Mengenkopf aufgeführten Ordnungsklassen wie mit ALL markierte Zeilen behandelt werden und demgemäß für alle Ordnungsklassen, die nicht in der Menge vorhanden sind, mit NIL markierte Zeilen vorhanden sind.

22. Verfahren nach Anspruch 20 oder 21, wobei mit NIL gekennzeichnete Teilmengen wie nicht vorhandene Zeilen behandelt werden, Vereinigung und Durchschnit von zwei mit ALL markierten Zeilen durch mit ALL markierte Zeilen gebildet werden, Antivalenz zweier mit ALL markierter oder Negation einer mit ALL markierten Zeile durch mit NIL markierte oder unterdrückte Zeilen gebildet werden und ansonsten mit ALL markierte Zeilen durch einen Verweis auf eine vollständig gefüllte, in einem Zugriffsformat gespeicherte Teilmenge ersetzt werden.

23. Verfahren nach einem der Ansprüche 16 bis 22, wobei für eine Teilmenge ein Zähler für die Anzahl der eingetragenen Elemente geführt wird und nach Abschluß einer Bearbeitung diese in ein Ablageformat gewandelt wird, wenn der Zähler eine erste vorgegebene Schranke unterschreitet und in ein Zugriffsformat gewandelt wird, wenn der Zähler eine zweite vorgegebene Schranke überschreitet.

24. Verfahren nach einem der Ansprüche 16 bis 22, wobei für den Fall, daß die Zielmenge im Ablageformat erstellt wird und bereits vor deren Erstellung bekannt ist, daß sie nicht nach den Verfahren nach Anspruch 16 bis 22 weiterverarbeitet wird, als Ablageformat eine Sequenz verwendet wird, welche die vollständigen Ordnungsnummern speichert.

25. Anwendung einer Anordnung nach einem der Ansprüche 1 bis 6 oder eines der Verfahren nach einem der Ansprüche 7 bis 24 auf die Speicherung oder Verknüpfung von Datenbankabfragen.

## Claims

1. Arrangement of data in a memory in a computer installation for storing a set of elements which is intended for logic combination by processing means in the computer installation, where
- the elements in the set are determined by a preferably binary-coded integer referred to as an ordinal number;
- the ordinal number is divided into an ordinal class, which is the quotient, and an ordinal remainder, which is the remainder, by means of division by a predetermined module which is the same for all elements;
- a first number of consecutive first memory cells stores a set header as a table of rows, in which each row comprises the same quantity of memory cells;
- the memory cells in each row store firstly an ordinal class and secondly a link to a subset by storing an address for a number of second memory cells, with the ordinal classes stored in the rows being disjunct in pairs,
**characterized in that**
the subsets are stored in consecutive second memory cells in one of at least two different formats which can be converted into one another and use only the ordinal remainder, where
* a first format is a filing format in which the ordinal remainders in a second number of memory cells are stored not necessarily sorted or free of duplicates,
* a second format is an access format in which the ordinal remainders in a third number of memory cells are stored sorted and free of duplicates.

2. Arrangement according to Claim 2, where the access format used is a bit string in which the ordinal remainders can be stored by virtue of every possible ordinal remainder having an associated bit from memory cells which are consecutive in the memory.

3. Arrangement according to Claim 2, where one access format used is a hierarchic bit list.

4. Arrangement according to Claim 2, where one access format used is a tree.

5. Arrangement according to one of Claims 1 to 4, where the filing format used is a sequence of ordinal remainders which stores the ordinal remainders in one or more respective memory cells which are consecutive in the memory.

6. Arrangement according to one of Claims 1 to 4, where the filing format used is sequential storage using a data compression method.

7. Operating method for storing sets, intended for logic combination by processing means in the computer installation, in a computer installation's memory, where
- the elements in a set are determined by an integer, the ordinal number;
- the ordinal number is divided by a predetermined module and is thus divided into an ordinal class, which is the quotient, and an ordinal remainder, which is the remainder;
- for each set, a set header is written to a table, with the set header comprising at least as many rows as the set has ordinal classes;
- each row of a set header stores the ordinal class as a key and an address for a subset, with a subset containing entries for elements in the same ordinal class,
**characterized in that**
subsets are stored in one of at least two different formats which can be converted into one another and use just the ordinal remainder, where
* a first format is a filing format in which the ordinal remainders are stored not necessarily sorted or free of duplicates,
* a second format is an access format in which the ordinal remainders are stored sorted and free of duplicates.

8. Method according to Claim 7, where one access format used is a bit string.

9. Method according to Claim 7, where one access format used is a hierarchic bit list.

10. Method according to Claim 7, where one access format used is a tree.

11. Method according to one of Claims 7 to 10, where one filing format used is a sequence of ordinal remainders.

12. Method according to one of Claims 7 to 10, where the filing format used is sequential storage using a data compression method.

13. Method according to one of Claims 7 to 12, where a binary computer is used, the value range for the ordinal number corresponds to the word length in the computer used or to a multiple thereof, and the module is a power of two.

14. Method according to one of Claims 7 to 13, where a subset in a filing format is converted into an access format if its magnitude exceeds a prescribed limit.

15. Method according to one of Claims 7 to 13, where a subset in an access format is converted into a filing format if its magnitude falls below a prescribed limit.

16. Operating method for a computer installation for logically combining two source sets, stored in accordance with one of Claims 1 to 15, for producing a union among sets, resulting in a target set,
**characterized by** the following steps:
- the set header for the target set is produced by mixing the set headers of the source sets by virtue of rows with ordinal classes which occur in just one of the source sets being adopted unchanged, and a target subset being able to be created from the source subsets of rows in the same ordinal classes in the following manner:
- if both source subsets are stored in an access format, then the entries are logically combined in the stored order by an OR operation to produce a target subset in an access format,
- if both source subsets are stored in a filing format, then the target subset is produced in a filing format by means of unsorted addition of one of the two source subsets to a copy of the other source subset,
- otherwise, the target subset is created as a copy of the source subsets stored in the access format and then the source subset stored in the filing format is processed in its stored order, and the respective ordinal remainder is entered into the target subset.

17. Operating method for a computer installation for logically combining two source sets, stored in accordance with one of Claims 1 to 15, for forming an intersection among sets, resulting in a target set,
**characterized by** the following steps:
- the set header of the target table is produced by mixing the set headers of the source tables such that only rows in the same ordinal classes are transferred to the target set, and a target subset can be created from the source subsets in the following manner:
- if both source subsets are stored in an access format, then the entries are logically combined in the stored order by an AND operation to produce a target subset in an access format,
- otherwise, the first source subset stored in the filing format is processed in its stored order, the respective ordinal remainder is sought in the other source subset stored in the access format, and, if it has been found, is appended to an initially empty target subset in the filing format.

18. Operating method for a computer installation for logically combining two source sets, stored in accordance with one of Claims 1 to 15, for forming an antivalence among sets, resulting in a target set,
**characterized by** the following steps:
- the set header of the target set is produced by mixing the set headers of the source sets by virtue of rows with ordinal classes which occur in just one of the source sets being adopted unchanged, and a target subset being able to be created from the source subsets of rows in the same ordinal classes in the following manner:
- if both source subsets are stored in an access format, then the entries are logically combined in the stored order by an XOR operation to produce a target subset in the access format,
- if both source subsets are stored in a sequence format, then one subset, preferably the longer, is converted into an access format and the next step is performed,
- otherwise, the first source subset, stored in the filing format, is processed in its stored order and the respective ordinal remainder is sought in the other source subset, stored in the access format, is inverted and is transferred to the target subset, with the target subset being created beforehand as a copy of the other source subset in the access format.

19. Operating method for a computer installation for forming a complement among sets for a source set stored in accordance with one of Claims 1 to 15, resulting in a target set, **characterized by** the following steps:
- the set header of the target set is produced from the set header of the source set by virtue of rows with a reference to a completely occupied subset being created for ordinal classes which do not occur in the source set, and a target subset being able to be created from the remaining source subsets in the following manner:
- if the source subset is stored in the access format, then the target subset is created as a copy of the source subset with inverted entries,
- otherwise, the source subset available in the filing format is processed in its stored order by virtue of the respective ordinal remainders being deleted from a target subset which has been created as a completely filled subset in the access format.

20. Method according to one of Claims 16 to 19, where the reference is marked as NIL for an empty subset, and the reference is marked as ALL for a completely filled subset, without any subset being available.

21. Method according to Claim 20, where a set header can be marked such that all the ordinal classes which are not shown in the set header are treated as rows marked with ALL, and accordingly rows marked with NIL are available for all the ordinal classes which are not available in the set.

22. Method according to Claim 20 or 21, where subsets identified with NIL are treated as rows which are not available, union and intersection for two rows marked with ALL are formed by rows marked with ALL, antivalence for two rows marked with ALL or negation for a row marked with ALL are formed by rows marked with NIL or suppressed, and otherwise rows marked with ALL are replaced by a reference to a completely filled subset stored in an access format.

23. Method according to one of Claims 16 to 22, where, for a subset, a counter is managed for the number of entered elements and, following the conclusion of processing, the latter is converted into a filing format if the counter is below a first prescribed limit and is converted into an access format if the counter is above a second prescribed limit.

24. Method according to one of Claims 16 to 22, where, if the target set is created in the filing format and it is already known, prior to creation thereof, that it is not being processed further in accordance with the methods according to Claims 16 to 22, the filing format used is a sequence which stores the complete ordinal numbers.

25. Use of an arrangement according to one of Claims 1 to 6 or of one of the methods according to one of Claims 7 to 24 for the storage or logic combination of database queries.

## Revendications

1. Agencement de données dans une mémoire d'un système informatique en vue de mémoriser un flot d'éléments destinés à être combinés par des moyens de traitement du système informatique, dans lequel
- les éléments du flot sont définis par un nombre entier codé, avantageusement binaire, ,désigné sous le nom de numéro d'ordre ;
- le numéro d'ordre se décompose au moyen d'une division par un module prédéterminé identique pour tous les éléments en une classe d'ordre qui est le quotient et en un reste d'ordre qui est le reste ;
- une tête de flot est mémorisée dans un premier nombre de premières cellules de mémoire successives sous la forme d'une table de lignes dans laquelle chaque ligne comporte la même quantité de cellules de mémoire ;
- dans les cellules de mémoire de chaque ligne sont mémorisées en premier lieu une classe d'ordre et en deuxième lieu une liaison à un flot partiel en mémorisant une adresse d'un nombre de deuxièmes cellules de mémoire, les classes d'ordre mémorisées dans les cellules étant disjointes par paire,
**caractérisé en ce que** la mémorisation des flots partiels dans des deuxièmes cellules de mémoire successives est effectuée dans un format choisi parmi au moins deux formats différents, convertissables. l'un dans l'autre et utilisant simplement le reste d'ordre,
* un premier format étant un format de rangement, dans lequel les restes d'ordre d'un deuxième nombre de cellules de mémoire ne sont pas nécessairement triés ou mémorisés sans duplication,
* un deuxième format étant un format d'accès, dans lequel les restes d'ordre d'un troisième nombre de cellules de mémoire sont triés et mémorisés sans duplication.

2. Agencement selon la revendication 2, dans lequel il est utilisé comme format d'accès une chaîne binaire dans laquelle les restes d'ordre peuvent être rangés de telle sorte que un bit de cellules de mémoire successives dans la mémoire est associé à chaque reste d'ordre possible.

3. Agencement selon la revendication 2, dans lequel il est utilisé comme format d'accès une liste de bits hiérarchisée.

4. Agencement selon la revendication 2, dans lequel il est utilisé comme format d'accès une arborescence.

5. Agencement selon l'une des revendications 1 à 4, dans lequel il est utilisé comme format de rangement une séquence de restes d'ordre, dans laquelle les restes d'ordre sont rangés dans une ou plusieurs cellules de mémoire successives dans la mémoire.

6. Agencement selon l'une des revendications 1 à 4, dans lequel il est utilisé comme format de rangement une mémorisation séquentielle en utilisant un procédé de compression de données.

7. Procédé de mémorisation de flots destinés à être combinés par des moyens de traitement du système informatique dans la mémoire d'un système informatique, dans lequel
- les éléments d'un flot sont définis par un nombre entier qui est le numéro d'ordre ;
- le numéro d'ordre est divisé par un module prédéterminé et se décompose donc en une classe d'ordre qui est le quotient et en un reste d'ordre qui est le reste ;
- pour chaque quantité une tête de flot est écrit dans une table, la tête de flot comportant au moins autant de lignes que le flot a de classes d'ordre ;
- la classe d'ordre se présentant sous la forme d'une clé et une adresse d'un flot partiel sont mémorisées dans chaque ligne d'une tête de flot, des éléments d'une même classe d'ordre étant introduits dans un flot partiel,
**caractérisé dans ce que**
des flots partiels sont mémorisés dans un format choisi parmi au moins deux formats différents, convertissables l'un dans l'autre et utilisant simplement le reste d'ordre,
* un premier format étant un format de rangement, dans lequel les restes d'ordre d'un deuxième nombre de cellules de mémoire ne sont pas nécessairement triés ou mémorisés sans duplication,
* un deuxième format étant un format d'accès, dans lequel les restes d'ordre sont triés et mémorisés sans duplication.

8. Procédé selon la revendication 7, dans lequel il est utilisé comme format d'accès une chaîne binaire.

9. Procédé selon la revendication 7, dans lequel il est utilisé comme format d'accès une liste de bits hiérarchisée.

10. Procédé selon la revendication 7, dans lequel il est utilisé comme format d'accès une arborescence.

11. Procédé selon l'une des revendications 7 à 10, dans lequel il est utilisé comme format de rangement une séquence de restes d'ordre.

12. Procédé selon l'une des revendications 7 à 10, dans lequel il est utilisé comme format de rangement une mémorisation séquentielle en utilisant un procédé de compression de données.

13. Procédé selon l'une des revendications 7 à 12, dans lequel il est utilisé un calculateur numérique, dans lequel le domaine de valeurs du numéro d'ordre correspond à la longueur de mot du calculateur utilisé ou à un multiple de celle-ci et dans lequel le module est une puissance de 2.

14. Procédé selon l'une des revendications 7 à 13, dans lequel un flot partiel dans un format d'accès est converti ensuite dans un format de mémorisation lorsque sa taille est supérieure à une limite prédéterminée.

15. Procédé selon l'une des revendications 7 à 13, dans lequel un flot partiel dans un format d'accès est converti ensuite dans un format de rangement lorsque sa taille est inférieure à une limite prédéterminée.

16. Procédé d'exploitation d'un système informatique destiné à combiner deux flots source mémorisées conformément à l'une des revendications 1 à 15 en vue de réaliser un assemblage quantitatif, donnant un flot cible,
**caractérisé par** les étapes suivantes :
- la tête du flot cible est réalisée en mélangeant les têtes des flots source en prenant en charge sans modification des lignes avec des classes d'ordre qui ne se trouvent que dans l'un des flots source et en pouvant élaborer un flot partiel cible à partir des flots partiels source de lignes de classes d'ordre identiques de la façon suivante :
- les deux flots partiels source sont mémorisés dans un format d'accès, puis les entrées sont combinées dans l'ordre mémorisé par une opération OU pour donner un flot partiel cible dans un format d'accès,
- les deux flots partiels source sont mémorisés dans un format de rangement, puis le flot partiel cible est généré dans un format de rangement en ajoutant de façon non triée l'un des deux flots partiels source à une copie de l'autre flot partiel source,
- par ailleurs le flot partiel cible est élaboré en tant que copie du flot partiel source mémorisé dans le format d'accès, puis le flot partiel source mémorisé dans le format d'accès est traité dans l'ordre mémorisé et le reste d'ordre correspondant est introduit dans le flot partiel cible.

17. Procédé d'exploitation d'un système informatique destiné à combiner deux flots source mémorisés conformément à l'une des revendications 1 à 15 en vue de former une moyenne quantitative, donnant un flot cible, **caractérisé par** les étapes suivantes :
- la tête de flot de la table cible est réalisée en mélangeant les têtes de flot des tables source de façon à ne prendre en charge dans le flot cible que des lignes de même classe d'ordre et à pouvoir élaborer un flot partiel cible à partir des flots partiels source de la façon suivante :
- les deux flots partiels source sont mémorisés dans un format d'accès, puis les entrées sont combinées dans l'ordre mémorisé par une opération ET pour donner un flot partiel cible dans un format d'accès,
- par ailleurs l'un des flots partiels cible mémorisés dans le format d'accès est traité dans l'ordre mémorisé et le reste d'ordre correspondant est recherché dans l'autre flot partiel source mémorisé dans le format d'accès et, une fois trouvé, il est ajouté à un flot partiel cible au départ vide dans le format de rangement.

18. Procédé d'exploitation d'un système informatique destiné combiner deux flots source mémorisés conformément à l'une des revendications 1 à 15 en vue de former une disjonction quantitative, donnant un flot cible,
**caractérisé par** les étapes suivantes :
- la tête du flot cible est réalisée en mélangeant les têtes des flots source en prenant en charge sans modification des lignes avec des classes d'ordre qui ne se trouvent que dans l'un des flots source et en pouvant élaborer un flot partiel cible à partir des flots partiels source de lignes de classes d'ordre identiques de la façon suivante :
- les deux flots partiels source sont mémorisés dans un format d'accès, puis les entrées sont combinées dans l'ordre mémorisé par une opération OU exclusif pour donner un flot partiel cible dans un format d'accès,
- les deux flots partiels source sont mémorisés dans un format de séquence puis un flot partiel, de préférence le flot partiel plus, est converti dans un format d'accès et l'étape suivante est réalisée,
- par ailleurs l'un des flots partiels cible mémorisés dans le format d'accès est traité dans l'ordre mémorisé et le reste d'ordre correspondant est recherché dans l'autre flot partiel source mémorisé dans le format d'accès, est inversé et est transféré dans le flot partiel cible, le flot partiel cible étant auparavant élaboré en tant que copie de l'autre flot partiel source dans le format d'accès.

19. Procédé d'exploitation d'un système informatique destiné à former un complément quantitatif d'un flot source mémorisé conformément à l'une des revendications 1 à 15, donnant un flot cible, **caractérisé par** les étapes suivantes :
- la tête de flot du flot cible est réalisée à partir de la tête de flot du flot source en élaborant, pour des lignes qui ne se trouvent pas dans le flot source, des lignes avec une référence à un flot partiel complet et en pouvant élaborer un flot partiel cible à partir des flots partiels source de la façon suivante :
- les deux flots partiels source sont mémorisés dans le format d'accès, puis le flot partiel cible est élaboré en tant que copie du flot partiel source avec des entrées inversées,
- par ailleurs le flot partiel source existant dans le format de rangement est traité dans l'ordre mémorisé en supprimant les restes d'ordre correspondant du flot partiel cible qui a été élaboré en tant que flot partiel totalement rempli dans le format d'accès.

20. Procédé selon l'une des revendications 16 à 19, dans lequel pour un flot partiel vide la référence est marquée NIL resp. pour un flot partiel totalement rempli la référence est marquée ALL sans la présence d'un flot partiel.

21. Procédé selon la revendication 20, dans lequel une tête de flot peut être marquée de telle sorte que toutes les classes d'ordre qui ne sont pas mentionnées dans la tête de flot sont traitées comme des lignes marquées ALL et en conséquence sont présentes avec des lignes marquées NIL pour toutes les classes d'ordre qui ne sont pas présentes pas dans le flot.

22. Procédé selon la revendication 20 ou 21, dans lequel des flots partiels **caractérisés par** NIL sont traités comme des lignes non présentes, l'assemblage et la moyenne de deux lignes marquées ALL sont formées par des lignes marquées ALL, la disjonction de deux lignes marquées ALL ou la négation d'une ligne marquée ALL sont formées par des lignées marquées NIL ou supprimées et par ailleurs des lignes marquées ALL sont élaborées par une référence à un flot partiel totalement rempli et mémorisé dans un formant d'accès.

23. Procédé selon l'une des revendications 16 à 22, dans lequel il est prévu pour un flot partiel un compteur de la quantité d'éléments introduits et à la fin d'un traitement ce flot est converti dans un format de rangement lorsque la valeur du compteur est inférieure à une première limite prédéterminée et dans un format d'accès lorsque la valeur du compteur est supérieure à une deuxième limite prédéterminée.

24. Procédé selon l'une des revendications 16 à 23, dans lequel il est utilisé comme format de rangement une séquence qui mémorise les numéros d'ordre complets dans le cas où le flot cible est élaboré dans le format de rangement et est déjà connu avant son élaboration et dans le cas où le flot cible est traité ultérieurement conformément au procédé de la revendication 16 à 22.

25. Application d'un agencement selon l'une des revendications 1 à 6 ou de l'un des procédés selon l'une des revendications 7 à 24 à la mémorisation ou à la combinaison de requêtes de base de données.
